# EUROPEAN PATENT SPECIFICATION

(11) **EP 3 936 082 B1**
(45) Date of publication and mention of the grant of the patent: **01.05.2024**
(21) Application number: 20769460.5
(22) Date of filing: 12.03.2020
(51) Int. Cl.: A61C 13/00, A61C 9/00, A61C 8/00, A61C 13/34

(54) **METHOD OF PROCESSING THREE-DIMENSIONAL SCAN DATA FOR MANUFACTURE OF DENTAL PROSTHESIS**
VERFAHREN ZUR VERARBEITUNG VON DREIDIMENSIONALEN ABTASTDATEN ZUR HERSTELLUNG VON ZAHNERSATZ
PROCÉDÉ DE TRAITEMENT DE DONNÉES DE BALAYAGE TRIDIMENSIONNEL POUR LA FABRICATION D'UNE PROTHÈSE DENTAIRE

(30) Priority: 12.03.2019 KR 20190028137
(43) Date of publication of application: 12.01.2022
(73) Proprietor: Medit Corp., Seoul 02855 (KR)
(72) Inventor: CHANG, Min Ho, Seoul 06092 (KR); LEE, Dong Hoon, Goyang-si, Gyeonggi-do 10242 (KR); CHOI, Won Hoon, Seoul 05823 (KR); SONG, Myoung Woo, Seoul 06518 (KR); KIM, Jin Su, Seoul 02028 (KR)
(74) Representative: Klunker IP Patentanwälte PartG mbB
(86) International application number: PCT/KR2020/003475
(87) International publication number: WO 2020/185015

(56) References cited:
- JP-A- 2006 175 205
- KR-B1- 101 189 550
- KR-B1- 101 631 258
- KR-B1- 101 631 258
- KR-B1- 101 632 378
- KR-B1- 101 726 706
- KR-B1- 101 915 215
- US-A1- 2018 206 950

## Description

### Technical Field

The present disclosure relates to a method for processing three-dimensional (3D) scanned data to manufacture a dental prosthesis, and more particularly, to a method for processing 3D scanned data to manufacture a dental prosthesis, which performs a 3D scan of an oral cavity and simultaneously aligns 3D scanned data and digital data, when acquiring 3D scanned data of the shape of the oral cavity, and determine the alignment state to provide final location alignment information.

### Background Art

In general, the teeth of a person enable the person to chew food, such that the food can be easily digested, and play an important role in pronunciation. When such teeth are abnormal, the states of the teeth need to be diagnosed and treated. If necessary, artifacts are implanted in place of the respective teeth.

In general, when a tooth is lost, an artificial tooth is implanted through a tooth implant procedure.

When an abutment is used to manufacture a prosthesis which is to be used for the implant procedure, the finally manufactured prosthesis (e.g. crown) is put on a custom abutment. Therefore, it is necessary to accurately measure the shape of the abutment in a 3D manner.

Recently, various attempts have been actively made to directly measure (3D scan) an abutment in the oral cavity of a patient through an intraoral scanner, such that the abutment is utilized for prosthesis design.

In most cases, however, an abutment is highly polished, and made of a material to easily cause diffused reflection, which makes it difficult to scan the abutment through an intraoral scanner. Furthermore, the angle at which the tip of the oral scanner can be moved may be limited by the oral structure of a patient. Thus, it may be considered that the level of difficulty in scanning the abutment is very high. Therefore, it takes a lot of time to scan an abutment in an oral environment. Although the abutment is scanned, there is a limitation in manufacturing a proper prosthesis because a margin is not accurately scanned.

Therefore, in order to make up for the limitation in scanning an abutment, another method may be applied, which includes mounting a scanbody having a predetermined shape and dimensions in the oral cavity of a patient instead of an abutment, identifying the location information of the abutment by scanning the scanbody through an intraoral scanner, and then manufacturing a prosthesis. However, even when the scanbody is scanned through the intraoral scanner, there are similar problems to the case in which an abutment is scanned. For example, the angle at which the tip of the intraoral scanner is moved may be limited, or a considerable time may be required for scanning the scanbody.

Furthermore, there are no standards for determining whether the abutment or scanbody is reliably scanned, before a step of designing the prosthesis. Therefore, more data than necessary may need to be acquired.

US 2018/0206950 A1 discloses a method for manufacturing a dental implant prosthesis using a digital library, the method including a first step of acquiring a three-dimensional integrated image through image matching of a computerized tomography (CT) image and an oral scan image related to an inside of an oral cavity of a person to be treated, a second step of virtually forming a bored hole according to an implant placement position preset in the three-dimensional integrated image, a third step of calculating a set value on the basis of a depth of the bored hole, a fourth step of extracting a single virtual digital one-body abutment corresponding to the set value, and a fifth step of setting a shape-matching portion inside the crown according to three-dimensional outer shape information of the virtually arranged virtual digital one-body abutment.

KR 10-1631258 B1 discloses a manufacturing method of a three-dimensional oral confirm model using a digital scan body, comprising: a first step of coupling a digital scan body having a scan reference surface to correspond to a virtual digital scan body selected from a three-dimensional digital library to a fixture implanted in an oral cavity of a patient; a second step of acquiring an oral scan image with respect to the oral cavity of the patient, including a position where the digital scan body is coupled, and acquiring a three-dimensional oral image through the oral scan image; a third step of matching the virtual digital scan body with a digital scan body image displayed on the three-dimensional oral image, and virtually arranging the matched virtual digital scan body; a fourth step of matching a virtual digital analog selected to correspond to the fixture from the three-dimensional digital library with the virtual digital scan body which is virtually arranged, and virtually arranging the matched virtual digital analog; and a fifth step of acquiring a digital impression image of which parts corresponding to the virtual digital analog and the virtual digital scan body are removed from the three-dimensional oral image, and producing a three-dimensional oral confirm model by three-dimensionally printing the digital impression image.

KR 10-1632378 B1 discloses a method for manufacturing a crown for dental implant using a digital library, the method comprising: a first step of coupling a digital abutment corresponding to a virtual digital abutment selected from a virtual digital library and a digital protect cap selected to correspond to the digital abutment to an upper portion of a fixture, implanted inside the oral cavity of a subject, and storing an oral scanned image obtained by oral scanning in a terminal of an operator; a second step of transmitting the oral scanned image stored in the terminal of the operator, and selection information of the digital abutment and the digital protect cap to a server of a manufacturer; a third step of virtually disposing the virtual digital protect cap by calculating three dimensional location information of the digital protect cap image displayed on the oral scanned image, and matching the virtual digital protect cap extracted according to the selection information from the digital library to the digital protect cap image based on the calculated three dimensional location information; and a fourth step of manufacturing a crown whose outer appearance is established based on the arrangement of peripheral teeth, and has a coupling unit corresponding to the virtual digital abutment whose three dimensional location inside the oral scanned image has been established by the virtual digital protect cap, which is virtually disposed.

### DISCLOSURE

### Technical Problem

Various embodiments are directed to a method for processing 3D scanned data to manufacture a dental prosthesis, which can perform a 3D scan on the inside of an oral cavity and simultaneously align 3D scanned data and digital data, when acquiring the 3D scanned data on the internal structure of the oral cavity, and determine the alignment state to provide final location alignment information, the digital data indicating a group of CAD data of a separate abutment or scanbody or 3D scanned data obtained by scanning thee abutment or scanbody.

The technical problems of the present disclosure are not limited to the above-described problems, and other technical problems which are not described will be clearly understood by those skilled in the art, based on the following descriptions.

### Technical Solution

In an embodiment, a method for processing 3D scanned data to manufacture a dental prosthesis may include: acquiring image data from a target object, on which a structure for prosthesis treatment is installed, through a 3D scanner; acquiring the shape information of the structure from the image data; comparing the shape information of the scanned structure, acquired in the acquiring of the image data, to reference data for the structure; and aligning the locations of the reference data and the scanned structure, on the basis of the comparison result.

The structure may be a scanbody or abutment.

The target object may be a model obtained by replicating the inside of the actual oral cavity of a patient or the internal structure of the oral cavity of a patent.

The acquiring of the image data may include acquiring a plurality of 2D image data from a scan unit of the 3D scanner, and generating 3D image data on the basis of the plurality of acquired 2D data.

The acquiring of the image data may include forming 3D model data by connecting and aligning the 3D image data.

The acquiring of the image data may further include updating the image data by scanning new image data in real time.

The updating of the image data may include superimposing the newly acquired image data on the previously acquired image data.

The acquiring of the shape information of the scanned structure, the comparing of the shape information, and the aligning of the locations may be performed at the same time as the acquiring of the image data.

The method may further include, after the comparing of the shape information of the image data to the reference data, determining whether the comparison result satisfies an end reference value, and ending the acquiring of the image data and the aligning of the locations according to an end condition.

The reference data and the image data may be automatically aligned.

The aligning of the locations may include aligning the reference data on the basis of the scanned location of the image data.

The aligning of the locations may be performed by superimposing a reference point of the image data on a reference point of the reference data for the structure.

The number of the reference points may be set to one or three.

The acquiring of the image data, the acquiring of the shape information, the comparing of the shape information, and the aligning of the locations may be performed on a scan interface.

The method may further include loading the reference data for the structure from a previously mounted library.

In the loading of the reference data, the reference data for the structure may be displayed on a library interface different from the scan interface.

The loading of the reference data may include selecting and assigning reference data for the structure, needed by a user, and arranging a 3D model of the reference data for the structure, selected in the selecting and assigning of the reference data, at a random location on the scan interface.

The reference data for the structure may be any one of 3D CAD plan data of the structure, 3D surface data obtained by converting the plan data, and feature point data extracted from the 3D CAD plan data or the 3D surface data.

### Advantageous Effects

In accordance with the embodiment of the present disclosure, the method for processing 3D scanned data to manufacture a dental prosthesis may acquire correct data on an oral structure by matching acquired image data and digital data, and easily manufacture a prosthesis based on the correct data.

The method may automatically align a library of an abutment or scanbody with some data acquired during a scan process, and provide feedback data on the alignment, such that a subsequent scan can be correctly performed.

After only data required for alignment is acquired, the method may substitute the data with designated design data. Thus, the scan process may be significantly simplified to considerably reduce the scan time, which makes it possible to minimize a patient's inconvenience.

The method may easily acquire data on an oral structure only with data on the shape, by using digital data.

The method may acquire precise data while easily scanning an abutment or scanbody.

The method may acquire a 3D coordinate through a library, and design a prosthesis by using a substituted library coordinate, without a scanbody library alignment operation on a design program.

### Brief Description of Drawings

FIG. 1 is a diagram for describing the structure of an implant prosthesis in accordance with an embodiment of the present disclosure.
FIG. 2 is a schematic flowchart illustrating a method for processing 3D scanned data to manufacture a dental prosthesis in accordance with an embodiment of the present disclosure.
FIG. 3 is a detailed flowchart illustrating some steps of the method for processing 3D scanned data to manufacture a dental prosthesis in accordance with the embodiment of the present disclosure.
FIG. 4 is a diagram illustrating a scan interface through which the method for processing 3D scanned data to manufacture a dental prosthesis in accordance with the embodiment of the present disclosure is performed.
FIGS. 5 to 7 are diagrams illustrating a library interface through which the method for processing 3D scanned data to manufacture a dental prosthesis in accordance with the embodiment of the present disclosure is performed.
FIGS. 8 and 9 are diagrams illustrating a process of performing the method for processing 3D scanned data to manufacture a dental prosthesis in accordance with the invention.
FIGS. 10 and 11 are diagrams illustrating another library interface through which the method for processing 3D scanned data to manufacture a dental prosthesis in accordance with the invention is performed.
FIGS. 12 to 14 are diagrams illustrating a process of performing the method for processing 3D scanned data to manufacture a dental prosthesis in accordance with the invention.
FIGS. 15 to 18 are diagrams illustrating a process of performing manual alignment when data are not matched through automatic alignment, while the method for processing 3D scanned data to manufacture a dental prosthesis in accordance with the embodiment of the present disclosure is performed.

### Mode for Invention

The advantages and characteristics of the present disclosure and a method for achieving the advantages and characteristics will be clearly described through the following embodiments with reference to the accompanying drawings. However, the present disclosure may be embodied in different forms and should not be construed as being limited to the embodiments set forth herein. Rather, these embodiments are provided to make this disclosure thorough and complete, and fully convey the scope of the present disclosure to those skilled in the art. The invention is only defined by the scope of claims. Throughout the specification, like reference numerals refer to the same elements.

Scanned data described in the drawings of the present disclosure may indicate image data acquired by scanning an oral structure including a structure. As will be described below, the image data may indicate two-dimensional (2D) data, three-dimensional (3D) image data or 3D model data.

Hereafter, the present disclosure will be described in detail with reference to the drawings.

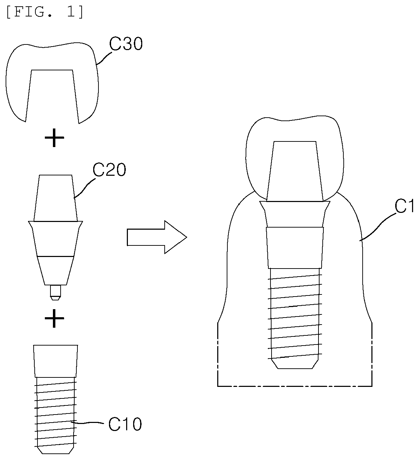

FIG. 1 is a diagram for describing the structure of an implant prosthesis in accordance with an embodiment of the present disclosure.

As illustrated in FIG. 1, a tooth implant crown procedure indicates a procedure of providing a substituent capable of substituting a busted tooth in an oral cavity of a patient, when the busted tooth is removed (extracted) and thus lost. In other words, the tooth implant crow procedure indicates a procedure of implanting an artificially manufactured tooth to substitute a natural tooth.

A tooth implant crown may be roughly divided into three components. One of the components is a fixture C10 which is formed to have a screw shape on the outer circumferential surface thereof, and turned and fixed to a gum C1. The fixture C10 may be a structure corresponding to the root of a natural tooth, and firmly fixed to an alveolar bone. The fixture C10 may have a cavity formed therein in a direction facing the direction in which the fixture C10 is fixed toward the gum C1. The cavity formed in the fixture C10 may be coupled to an object having a protrusion corresponding to the cavity.

In order to fix an artificial tooth C30 to the fixture C10, a structure C20 is needed between the artificial tooth C30 and the fixture C10 inserted into the bone of the gum. The structure C20 is connected to the fixture C10 so as to be placed over the gum, and coupled to a prosthesis, i.e. the artificial tooth C30. At this time, the structure C20 may include both a ready-made product and a custom product. The ready-made product may indicate a structure which is previously manufactured according to the heights of the implanted fixture C10 and the gum, and the custom product may indicate a structure which is manufactured suitably for the shapes of the gum and tooth of each patient. The fixture C10, the structure C20 and the artificial tooth C30 may be all coupled to substitute a busted or removed tooth.

At this time, in order to couple the structure C20 and the artificial tooth C30 after the fixture C10 is implanted into the alveolar bone of the gum, the location of the fixture C10 needs to be checked. Furthermore, the artificial tooth 30 may have a different shape and size for each person, not a standardized shape, even though the artificial tooth 30 is implanted at the same location of each person. Furthermore, since the teeth function to chew and cut food through the occlusion between the upper and lower jaws, the direction of a tooth also serves as an important factor during a coupling process with the artificial tooth C30. Therefore, the height and direction (specifically, axis) of the artificial tooth C30 need to be decided according to the oral structure of each person, such that the artificial tooth C30 normally functions to make a patient feel comfortable.

In order to accomplish the above-described object, a scanbody or abutment corresponding to the structure C20 coupled to the fixture C10 may be fastened to the fixture C10, and the inside of the oral cavity may be scanned to check the oral structure. Since the scanbody or abutment may be fastened to make it easy to check the depth and direction of the implanted fixture C10, the implant location and direction of the fixture C10 may be corrected before the artificial tooth C30 is coupled. Furthermore, the portion of the artificial tooth C30, coupled to the structure C20, may be processed to implement the height and direction of the artificial tooth C30, which are suitable for a patient.

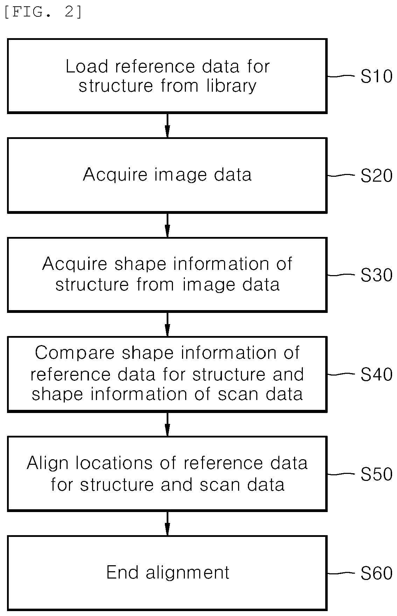

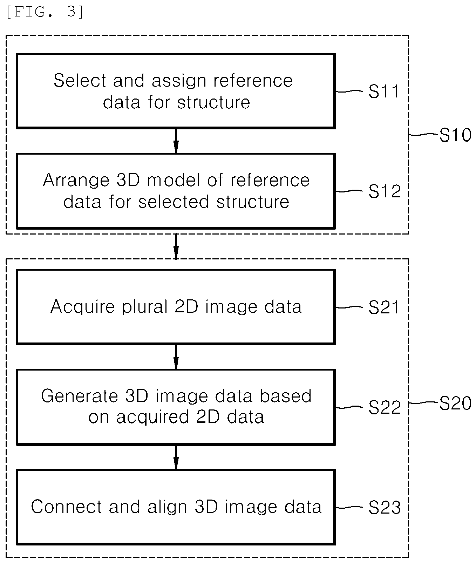

FIG. 2 is a schematic flowchart illustrating a method for processing 3D scanned data to manufacture a dental prosthesis in accordance with an embodiment of the present disclosure. FIG. 3 is a detailed flowchart illustrating some steps of the method for processing 3D scanned data to manufacture a dental prosthesis in accordance with the embodiment of the present disclosure.

Referring to FIG. 2, the method for processing 3D scanned data to manufacture a dental prosthesis in accordance with the embodiment of the present disclosure may include step S20 of acquiring image data from a target object by using a 3D scanner, with a prosthesis treatment structure installed on the target object, step S30 of acquiring the shape information of the structure from the image data, step S40 of comparing the shape information of the scanned structure, acquired in step S30, to that of reference data for the structure, and step S50 of aligning the location of the scanned structure with the location of the reference data, on the basis of the comparison result.

Hereafter, each of the steps included in the present disclosure will be described in detail.

In step S20 of acquiring the image data, a 3D scan is performed on the target object having the structure installed thereon. As a tool for performing the 3D scan, a 3D scanner may be used. The 3D scanner may acquire 3D surface data on the target object by scanning the target object. Examples of the 3D scanner, which is used to perform the method for processing 3D scanned data to manufacture a dental prosthesis in accordance with the embodiment of the present disclosure, in order to acquire the 3D surface data, may include a table scanner or handheld scanner.

As illustrated in FIG. 1, the structure may be a scanbody or abutment which may be coupled to the fixture C10. As the scanbody or abutment is coupled to the fixture C10, the depth and direction of the implanted fixture C10 may be checked, and a necessary operation may be performed before the artificial tooth C30 is applied.

The target object may correspond to the inside of the oral cavity of a patient who actually receives a dental prosthesis treatment, or a model obtained by replicating the internal structure of the oral cavity of a patient. As the model obtained by replicating the internal structure of the oral cavity of a patient, an impression taking model obtained by performing impression taking using a material such as alginate may be utilized, or a plaster cast acquired by using an impression taking model as a mold may be utilized.

Referring to FIG. 3, the 3D scanner may acquire raw data through a scan unit included therein in step S21. The scan unit may include one or more cameras. When light reflected from the target object is incident on a camera, an image sensor connected to the camera may analyze the light, and store the analyzed light in the form of digital data. At this time, the raw data acquired by initially storing the light incident on the camera may be 2D image data. The 3D scanner successively acquires a plurality of 2D data while performing the scan.

Step S20 of acquiring the image data may include generating 3D image data based on the plurality of acquired 2D image data, in step S22. In order to generate the 3D image data, the 3D scanner needs to convert the 2D image data into 3D image data, and requires depth information for convention from 2D data into 3D data. The depth information may be acquired through structured light emitted onto the target object.

Step S20 of acquiring the image data may include forming 3D model data by connecting and aligning the generated 3D image data, in step S23. When the 3D model data is formed, the model data may be three-dimensionally displayed on a scan interface 100, which will be described below, and the inside of the oral cavity of the patient may be analyzed through the model data. At this time, various methods may be adopted as the method of connecting and aligning the 3D image data. Desirably, the 3D image data may be connected and aligned through an ICP (Iterative Closest Point) method.

Furthermore, step S20 of acquiring the image data may include updating the image data by scanning new image data in real time, when the scan is continuously performed by the 3D scanner. The updating of the image data is not illustrated. The 3D scanner may acquire new raw data in real time, and reflect the acquired raw data into the 3D model data. At this time, when the new raw data are reflected into the 3D model data, it may indicate that new image data are superimposed on the previously acquired image data. When a plurality of 2D image data are acquired at the same location, the 3D scanner may determine whether the plurality of 2D image data are identical. When the plurality of 2D image data are identical, the 3D scanner superimposes the identical 2D image data. As such, the step of updating the image data by scanning new image data in real time may be used to remove temporary noise, which makes it possible to improve the reliability of the 3D model data.

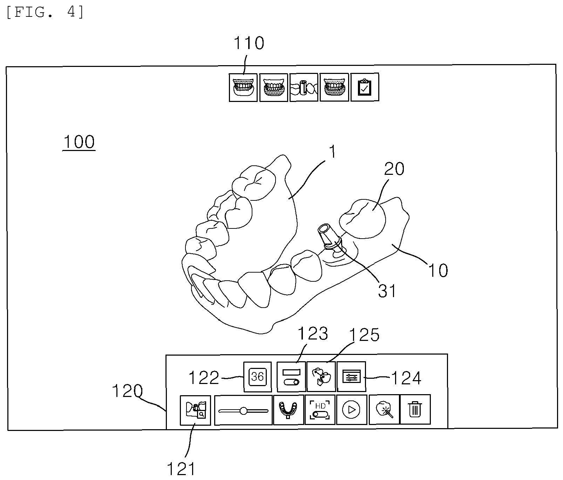

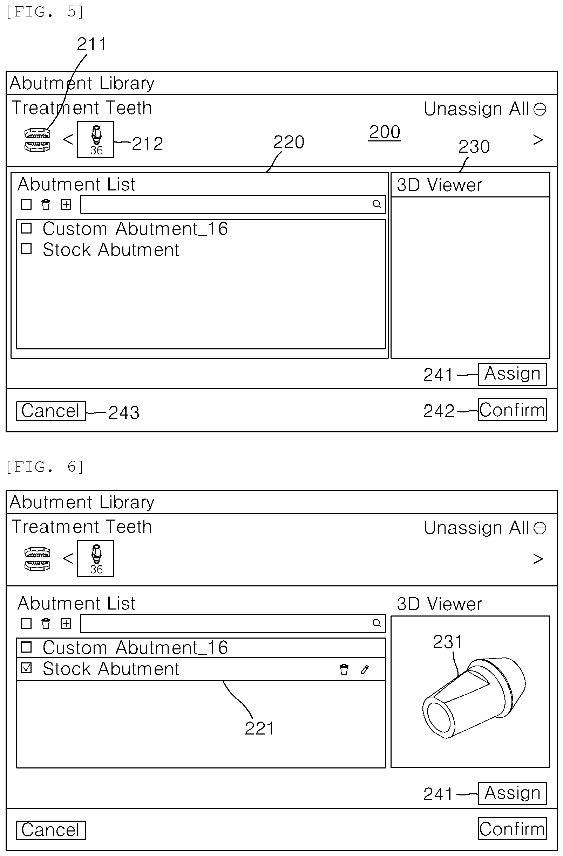

FIG. 4 is a diagram illustrating a scan interface through which the method for processing 3D scanned data to manufacture a dental prosthesis in accordance with the embodiment of the present disclosure is performed, and FIGS. 5 to 7 are diagrams illustrating a library interface through which the method for processing 3D scanned data to manufacture a dental prosthesis in accordance with the embodiment of the present disclosure is performed.

Referring to FIG. 4, 3D model data 1 is displayed on a scan interface 100. The 3D model data 1 includes 3D information on a scanned gum 10 and a scanned tooth 20, and an abutment 31 scanned with the gum 10 and the tooth 20 is also displayed. A scan location selection unit 110 for performing a 3D scan is formed at the top of the scan interface 100, and a function button unit 120 in which function keys required for scanning a target object and analyzing the 3D model data 1 are arranged is formed at the bottom of the scan interface 100. The function button unit 120 may include an AI (Artificial Intelligence) alignment button 121, a tooth number display button 122, an error display button 123, a library selection button 124 and a manual alignment button 125, which are used to perform various functions, and buttons will be described below, which may be used to describe the method for processing 3D scanned data to manufacture a dental prosthesis in accordance with the embodiment of the present disclosure.

Since the abutment 31 coupled to the inside of the oral cavity of a patient or a plaster cast is made of a metallic material, the abutment 31 may reflect light to raise the level of difficulty in scanning. In particular, it is difficult to acquire data for a portion adjacent to the gum 10. Therefore, there is a need for a method capable of making up for the scanned data of the abutment 31. In order to make up for the scanned image data, reference data for a structure may be loaded from a library mounted on a scan program in advance, in step S10. The structure may indicate a scanbody or abutment as described above. At this time, the image data may be desirably 3D model data.

Referring to FIGS. 4 and 5, the library selection button 124 on the function button unit 120 of the scan interface 100 may be clicked to form a library interface 200 on a window different from that of the scan interface 100. The library interface 200 may display ready-made abutment products for making up for the scanned abutment data. The library interface 200 includes a jaw display unit 211 configured to display a jaw whose data is to be made up for through a ready-made abutment, and a tooth location selection unit 212 configured to select the number of a tooth included in the corresponding jaw. That is, the library interface 200 may display jaw information and tooth information, whose data are to be made up for through a ready-made abutment, or a user may select jaw information and tooth information, whose data are to be made up for, through the user's manipulation. For example, FIG. 5 shows that an abutment corresponding to the location of a tooth #36 in the lower jaw is selected.

Referring to FIGS. 5 to 7, when the location to which the reference data for the structure is to be applied is decided through the tooth location selection unit 212, a data list unit 220 may list reference data corresponding to the tooth location. When the user selects target data 221, which the user wants to apply, through the data list unit 220, a thumbnail unit 230 formed adjacent to the data list unit 220 may display a 3D thumbnail 231 for the corresponding data. The user may check the schematic appearance of the reference data through the 3D thumbnail 231, before assigning the reference data. The 3D thumbnail 231 may be turned by the user's manipulation.

At this time, the reference data for the structure may be 3D CAD plan data of the structure, or 3D surface data obtained by converting the 3D CAD plan data into surface data. Furthermore, the reference data for the structure may be feature point data extracted from the 3D CAD plan data or 3D surface data. The feature point data may be used to compare and align image data and the reference data for the structure, and to match the locations and directions of the image data and the reference data for the structure.

The user may visually check the reference data, which the user wants to apply, through the thumbnail unit 230, and then assign the corresponding data, in step S11. When the user clicks an assign button 241 to assign the reference data, a 3D model 32 of the reference data is arranged at a random location of the scan interface 100 in step S12. The user may visually check whether the reference data was correctly assigned, through an icon displayed on one side of a tooth location selection unit 212a. At this time, this icon may have a check shape. However, the icon may be displayed in any shapes as long as the icon can notify that the reference data was assigned. The user may exit from the library interface 200 through a confirm button 242 or a cancel button 243. When the user exits from the library interface 200, the scan interface 100 may be displayed again.

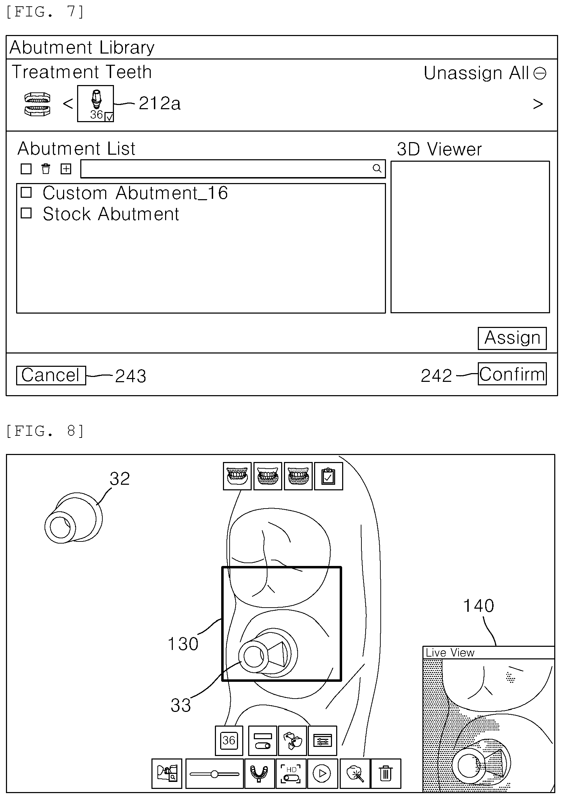

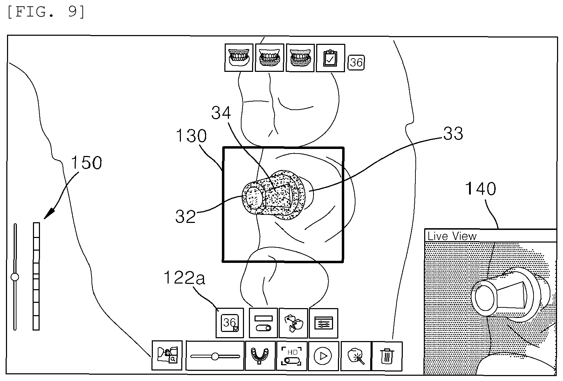

FIGS. 8 and 9 are diagrams illustrating a process in which the method for processing 3D scanned data to manufacture a dental prosthesis in accordance with the embodiment of the present disclosure is performed on the scan interface 100.

Referring to FIG. 8, the 3D model 32 of the reference data is arranged at a random location of the scan interface 100. When the scan process is started, the 3D scanner acquires image data in step S20, and the acquired image data is displayed in the form of the 3D model data 1 on a scan region 130 in real time.

As the scan process progresses, image data on the inside of the oral cavity including the gum 10 and the teeth 20, which are formed around the structure, as well as the structure are acquired, and shape information on the image data including the structure is acquired, in step S30. The shape information on the image data may include various pieces of geometrical information such as the surface profile information and surface color information of the inner surface of the oral cavity and the shape information, location information and axis information of the structure, which appear on the image data. Such shape information on the image data including the structure may be used during the comparison step S40 and the location alignment step S50, which will be described below.

In some cases, the 3D model data 1 including the gum 10 and the tooth 20 may be already formed when the image data are acquired. Therefore, sufficient data may be acquired for the structure whose data are insufficiently acquired, for example, an abutment model. Therefore, when the image data is acquired, only a part of the acquired image data, including the structure, may be identified and formed as the 3D model data 1. When only the image data including the structure is identified during the 3D scan, resources required for forming the 3D model data 1 may be reduced to lower a burden applied to a processor which performs 3D modeling, and the 3D modeling of selective data may increase the modeling speed and reduce the time required for the modeling.

For example, an abutment model 33 which is newly scanned is displayed on the scan region 130. Furthermore, a viewer region 140, which is located on one side of the scan interface 100 and on which the shape of a target object that is being scanned at the corresponding point of time is displayed during the scan process, displays the scan state in real time. As the scan region 130 and the viewer region 140 are displayed on the scan interface 100, the user may visually monitor whether the scan is being correctly performed.

When the data update is performed by scanning image data in real time and the image data are accumulated, the reference data for the structure corresponding to the 3D model 32 of the reference data arranged at a random location on the scan interface 100 is compared to the image data including the scanned structure, in step S40. At this time, the comparison between the image data and the reference data for the structure may include comparing the shape information of the reference data and the shape information of the image data. For example, the comparison of the shape information may include comparing the location information and axis information of the reference data and the location information and axis information of the image data. However, the present disclosure is not limited thereto, but the comparison of the shape information may include comparing various pieces of information, such as surface color information and surface profile information, corresponding to the shape information.

During the process of comparing the same or similar regions of the reference data and the image data by using the shape information, conversion information for aligning the two data to overlap each other may be generated. The conversion information may include parallel movement information and turning information through which one data is moved and turned by the other data. Alternatively, the conversion information may be feature point information for matching the same or similar regions of the two data. When the reference data and the image data can be matched through the shape information comparison between the two data, all or part of the reference data may be used to make up for the image data including the scanned structure, thereby replacing, substituting or making up for the image data.

When the shape information of the reference data for the structure and the shape information of the image data are compared to each other, the locations of the reference data and the image data may be aligned with each other on the basis of the comparison result, in step S50. At this time, one or more of various algorithms such as FPFH, SLAM and ICP (Iterative Closet Point) may be used to perform data alignment, and the present disclosure is not limited to a specific algorithm. If necessary, two or more alignment methods may be used to align the reference data and the image data. As illustrated in FIG. 9, the 3D model 32 of the reference data may be horizontally moved and turned so as to correspond to the location of the abutment model 33. Thus, according to the invention, the scanned image data and the reference data are coupled and formed as corrected data 34, and a scan error is displayed as a plurality of predetermined patterns or colors on the surface of the image data. When the error display button 123 is enabled, an error legend 150 may be displayed, and an error between the image data and the reference data may be displayed according to the patterns or colors displayed on the error legend 150. Furthermore, when the 3D model 32 of the reference data is horizontally moved and turned so as to correspond to the location and axial direction of the abutment model 33 and formed as the corrected data 34, a check shape may be marked on one side of the tooth number display button 122a, thereby visually informing the user that the data have been corrected.

Furthermore, in order to form the corrected data 34, the reference data and the image data may be automatically aligned with each other. When the AI alignment button 121 is activated, the shape information of image data may be acquired while the image data are continuously acquired and formed as the abutment model 33, and compared to the shape information of the randomly arranged 3D model 32 of the reference data, in order to perform location alignment. In the present embodiment, the image data may indicate the data of the abutment model. At this time, the location alignment may be performed on the basis of the image data, and the 3D model 32 of the reference data may be horizontally moved and turned, and then formed as the corrected data 34. Since the location and axial direction of the image data correspond to the location and direction of the structure actually coupled to the target object, the randomly arranged 3D model 32 of the reference data may be moved and turned to coincide with the image data, in order to correct the data. During the alignment process, the conversion information for aligning the reference data with the image data including the scanned structure may be stored. Thus, when the same structure is scanned in the same jaw, the data may be rapidly aligned.

Step S30 of acquiring the shape information of the structure, step S40 of comparing the shape information of the reference data and the shape information of the structure, and step S50 of aligning the locations may be performed in real time at the same time as step S20 of acquiring the image data. That is, as the image data are acquired, the shape information of the image data may be compared to that of the 3D model 32 of the reference data, arranged at a random location of the scan interface 100, and the location alignment between the image data and the 3D model 32 may be performed. When step S40 of comparing the shape information and step S50 of aligning the locations are repeatedly performed, the user may determine that the analysis result satisfies an end reference value, in case that the difference therebetween falls within a preset range set in a program, and end the acquisition of the image data and the location alignment, in step S60. For example, when the match rate between the shape information of the image data including the scanned structure and the shape information of the reference data is equal to or higher than 70%, the user may determine that the acquisition and analysis of the image data and the location alignment are not needed further. In this case, the user may end the acquisition of the image data to complete the alignment.

The generating of the 3D image data, the connecting and aligning of the 3D image data, the acquiring of the shape information of the structure from the image data including the structure, the comparing of the shape information of the reference data and the image data, the aligning of the locations of the reference data and the image data, and the ending of the process may be performed through a control unit. The control unit may include a processor which can perform calculation. Desirably, the above-described processes may be performed through a PC (Personal Computer). However, the control unit is not limited to a PC, and any device having a calculation function may serve as the control unit.

Hereafter, a process of correcting a structure in which a scanbody, not an abutment, is coupled to the fixture C10, through image data and reference data, and a process of manually aligning the locations of the reference data and the image data when the locations of the reference data and the image data are not automatically aligned with each other by an automatic alignment algorithm will be described.

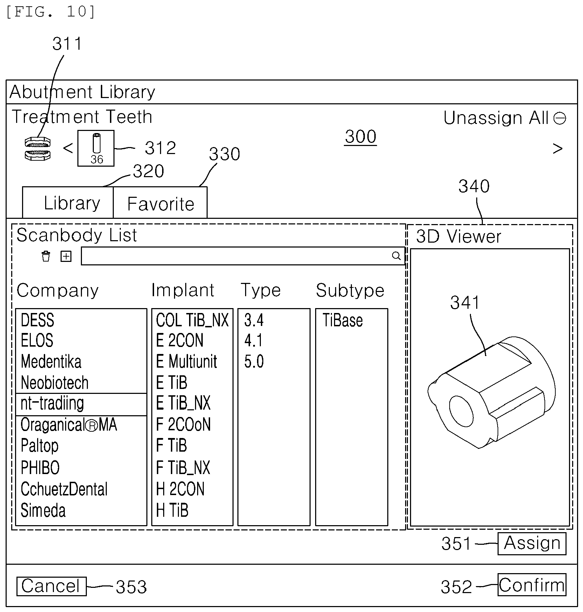

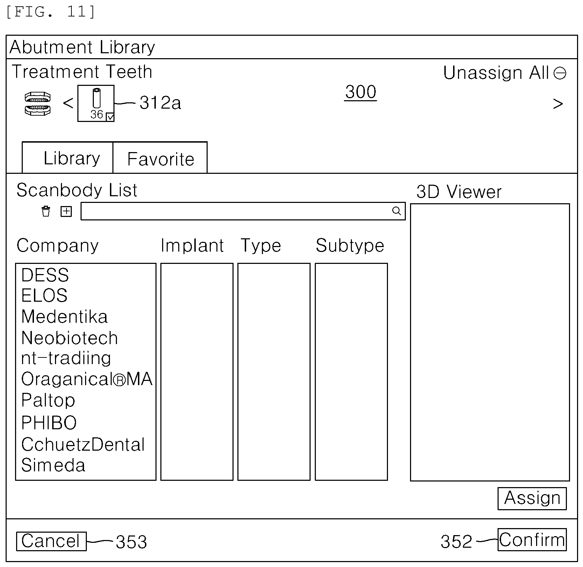

FIGS. 10 and 11 are diagrams illustrating another library interface through which the method for processing 3D scanned data to manufacture a dental prosthesis in accordance with the embodiment of the present disclosure is performed.

Referring to FIG. 10, a library interface 300 through which a scanbody embedded in the library can be selected as reference data may appear as illustrated in FIG. 5. The library interface 300 includes a jaw display unit 311 configured to display the location of a jaw in which the scanbody is to be installed, and a tooth location selection unit 312 configured to select a tooth number included in the corresponding jaw. For example, FIG. 10 illustrates that a scanbody corresponding to the location of a tooth #36 in the lower jaw is selected.

When the location to which the reference data for the structure is to be applied is decided through the tooth location selection unit 312, a data list unit 320 may list the reference data corresponding to the location of the corresponding tooth. At this time, the information of a structure may be subdivided into a manufacturer, implant, type and subtype. When the user selects target data, which the user wants to apply, from the data list unit 320, a thumbnail unit 340 formed adjacent to the data list unit 320 may display a 3D thumbnail 341 for the corresponding data. In the present embodiment, the structure may indicate the scanbody. The user may check the schematic appearance of the reference data through the 3D thumbnail 341, before assigning the reference data. The 3D thumbnail 341 may be turned by the user's manipulation.

Furthermore, a favorites list 330 may be additionally formed adjacent to the data list unit 320. Through the favorites list 330, the user may add a scanbody which is frequently used in the data list unit 320, and rapidly apply the scanbody without searching for the reference data at each time.

Referring to FIG. 11, the user may visually check the reference data, which the user wants to apply, through the thumbnail unit 340, and then assign the corresponding data. When the user clicks an assign button 351 to assign the reference data, a 3D model 36 of the reference data is arranged at a random location of the scan interface 100. The user may visually check whether the reference data was correctly assigned, through an icon displayed on one side of a tooth location selection unit 312a on the library interface 300. At this time, this icon may have a check shape. However, the icon may be displayed in any shapes as long as the icon can notify that the reference data was assigned. The user may exit from the library interface 300 through a confirm button 352 or a cancel button 353. When the user exits from the library interface 300, the scan interface 100 may be displayed again.

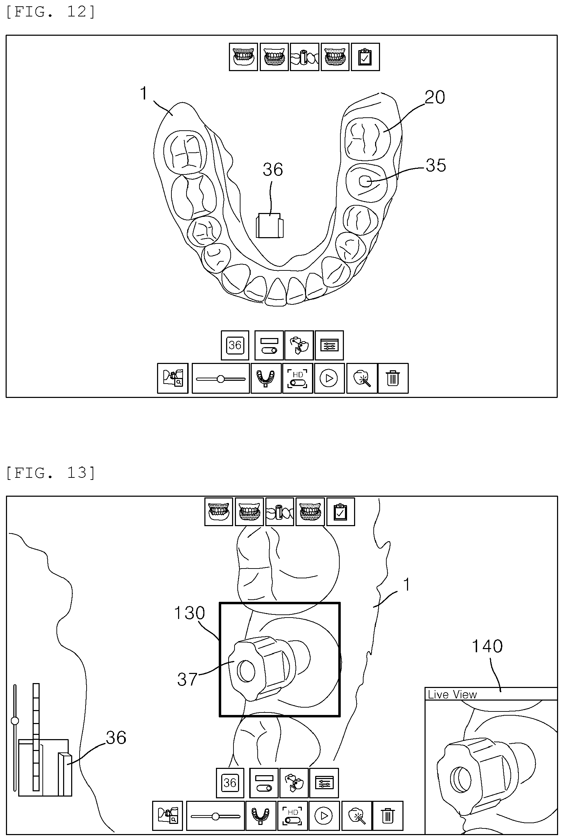

FIGS. 12 to 14 are diagrams illustrating a process of performing the method for processing 3D scanned data to manufacture a dental prosthesis in accordance with the embodiment of the present disclosure.

Referring to FIG. 12, 3D model data 1 including a tooth 20 and a scanbody 35 is displayed on the scan interface 100, and the 3D model 36 of the reference data is arranged at a random location. When a scan is performed as illustrated in FIG. 13, image data are acquired and superimposed on a scan region 130 through the 3D scanner as described above, and a viewer region 140, which is arranged on one side of the scan interface 100 and on which the shape of a target object that is being scanned at the corresponding point of time is displayed, displays the scan state in real time. A scanbody model 37 which is newly scanned is displayed on the scan region 130.

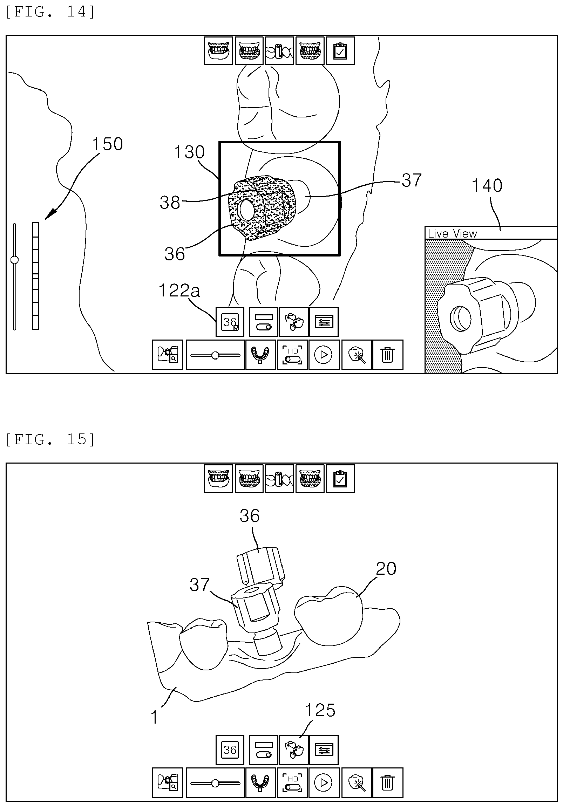

Referring to FIG. 14, when a sufficient amount of image data is acquired by the newly scanned scanbody model 37, the shape information of the image data may be compared to the shape information of the 3D model 36 of the reference data arranged at a random location of the scan interface 100. For example, the location information and axis information (direction information) of the image data may be compared to the location information and axis information (direction information) of the 3D model 36 of the reference data arranged at a random location of the scan interface 100. According to the comparison result, the 3D model 36 of the reference data may be horizontally moved and rotated to correspond to the location of the image data. Thus, according to the invention, the image data and the reference data are coupled and formed as corrected data 38, and a scan error is displayed as a plurality of predetermined patterns or colors on the surface of the image data. When an error display button 123 is enabled, an error legend 150 may be displayed, and an error between the image data and the reference data may be displayed according to the patterns or colors displayed on the error legend 150. Furthermore, when the 3D model 36 of the reference data is horizontally moved and turned so as to correspond to the location of the scanbody model 37 and formed as the corrected data 38, a check shape may be marked on one side of a tooth number display button 122a, thereby visually informing the user that the data have been corrected.

FIGS. 15 to 18 are diagrams illustrating a process of performing manual alignment when data are not matched through automatic alignment, while the method for processing 3D scanned data to manufacture a dental prosthesis in accordance with the embodiment of the present disclosure is performed.

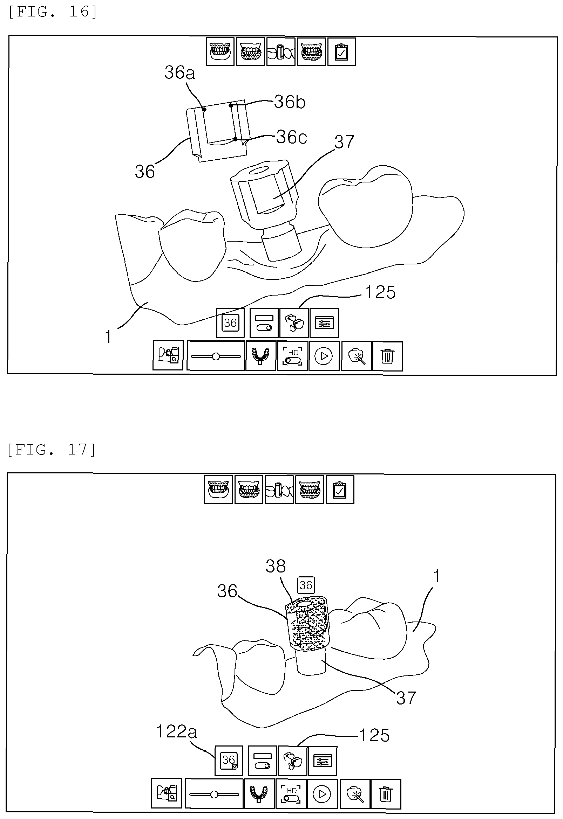

Referring to FIGS. 15 and 16, when the location of the 3D model 36 of the reference data is not automatically aligned with the location of the scanbody model 37 according to the AI alignment function, reference points of the image data and the reference data for the structure may be superimposed to manually perform location alignment. Through the function button unit 120 located on the scan interface 100, the user may click the manual alignment button 125 to designate the reference point on the 3D model 36 of the reference data and the reference point on the scanbody model 37, such that the reference points of the respective models 36 and 37 are superimposed through manual alignment. At this time, one point may be selected as the corresponding reference point on each of the models 36 and 37, or three points 36a to 36c may be set to reference points, in order to perform alignment. However, the number of reference points is not limited, but may be selected and used in consideration of the accuracy and speed of the alignment. As illustrated in FIG. 17, the 3D model 36 of the reference data may be horizontally moved and turned so as to correspond to the location of the scanbody model 37 and formed as corrected data 38, and a check shape may be marked on one side of the tooth number display button 122a, thereby informing the user that the data have been corrected.

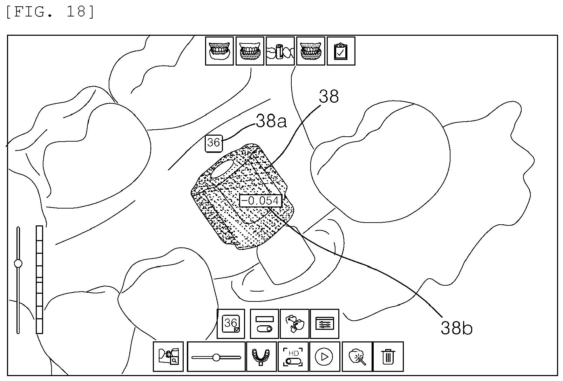

Referring to FIG. 18, a tooth number corresponding to the portion where the corrected data 38 is formed may be displayed on a tooth number balloon 38a, and thus enable the user to easily check the corresponding location. When a cursor is positioned on the surface of the corrected data 38, an error 38b between the 3D model 36 of the reference data and the scanbody model 37 may be displayed as a numeral value. Thus, although the manual alignment function is used, the user may determine whether the alignment has been correctly performed, on the basis of the error value 38b and the patterns or colors formed on the surface of the corrected data 38, and data with high reliability may be acquired to provide a precise prosthesis to a patient.

The above description is simply given for illustratively describing the present disclosure, and those skilled in the art to which the present disclosure pertains will appreciate that various modifications, changes, and substitutions are possible without departing from the essential characteristic of the present invention as defined inthe claims.

### Industrial Applicability

The present disclosure provides a method for processing 3D scanned data to manufacture a dental prosthesis, which acquires precise corrected data by aligning data using the information of image data acquired through a 3D scanner and library data stored in a library.

## Claims

1. A computer implemented method for processing 3D scanned data to manufacture a dental prosthesis, comprising:
acquiring image data (1) from a target object (10, 20), on which a structure (31, 35) for prosthesis treatment is installed, through a 3D scanner;
acquiring the shape information (33, 37) of the structure (31, 35) from the image data (1);
comparing the shape information (33, 37) of the scanned structure (31, 35), acquired in the acquiring of the image data (1), to reference data (32, 36) for the structure (31, 35); and
aligning the locations of the reference data (32, 36) and the shape information (33, 37) of the scanned structure (31, 35), on the basis of the comparison result,
wherein the reference data (32, 36) and the shape information (33, 37) of the scanned structure (31, 35) are coupled and formed as corrected data (34, 38), and
wherein a scan error is displayed as a plurality of predetermined patterns or colors on the surface of the image data (1).

2. The computer implemented method of claim 1, wherein the structure is a scanbody (35) or abutment (31).

3. The computer implemented method of claim 1, wherein the acquiring of the image data (1) comprises acquiring a plurality of 2D image data from a scan unit of the 3D scanner, and generating 3D image data (1) on the basis of the plurality of acquired 2D data.

4. The computer implemented method of claim 3, wherein the acquiring of the image data (1) further comprises updating the image data (1) by scanning new image data in real time,
wherein the updating of the image data comprises superimposing the newly acquired image data on the previously acquired image data.

5. The computer implemented method of claim 1, wherein the acquiring of the shape information (33, 37) of the scanned structure (31, 35), the comparing of the shape information (33, 37), and the aligning of the locations are performed at the same time as the acquiring of the image data (1).

6. The computer implemented method of claim 1, further comprising, after the comparing of the shape information (33, 37) of the image data (1) to the reference data (32, 36), determining whether the comparison result satisfies an end reference value, and ending the acquiring of the image data (1) and the aligning of the locations according to an end condition.

7. The computer implemented method of claim 1, wherein the reference data (32, 36) and the image data (1) are automatically aligned.

8. The computer implemented method of claim 7, wherein the aligning of the locations comprises aligning the reference data (32, 36) on the basis of the scanned location of the image data (1).

9. The computer implemented method of claim 1, wherein the aligning of the locations is performed by superimposing a reference point of the image data (1) on a reference point of the reference data (32, 36) for the structure (31, 35).

10. The computer implemented method of claim 9, wherein the number of the reference points is set to one or three.

11. The computer implemented method of claim 1, wherein the acquiring of the image data (1), the acquiring of the shape information (33, 37), the comparing of the shape information (33, 37), and the aligning of the locations are performed on a scan interface (100).

12. The computer implemented method of claim 11, further comprising loading the reference data (32, 36) for the structure (31, 35) from a previously mounted library.

13. The computer implemented method of claim 12, wherein in the loading of the reference data (32, 36), the reference data (32, 36) for the structure (31, 35) is displayed on a library interface (300) different from the scan interface (100).

14. The computer implemented method of claim 13, wherein the loading of the reference data (32, 36) comprises selecting and assigning reference data (32, 36) for the structure (31, 35), needed by a user, and arranging a 3D model (32, 36) of the reference data for the structure (31, 35), selected in the selecting and assigning of the reference data (32, 36), at a random location on the scan interface (100).

15. The computer implemented method of claim 1, wherein the reference data (23, 36) for the structure (31, 35) is any one of 3D CAD plan data of the structure (31, 35), 3D surface data obtained by converting the plan data, and feature point data extracted from the 3D CAD plan data or the 3D surface data.

## Patentansprüche

1. Computerimplementiertes Verfahren zur Verarbeitung von 3D-gescannten Daten zur Herstellung einer zahnärztlichen Prothese, umfassend:
Erfassen von Bilddaten (1) von einem Zielobjekt (10, 20), auf dem eine Struktur (31, 35) für die Prothesenbehandlung installiert ist, mittels eines 3D-Scanners;
Erfassen der Forminformationen (33, 37) der Struktur (31, 35) aus den Bilddaten (1); Vergleichen der Forminformationen (33, 37) der gescannten Struktur (31, 35), erfasst im Erfassen der Bilddaten (1), mit Referenzdaten (32, 36) für die Struktur (31, 35); und
Ausrichten der Positionen der Referenzdaten (32, 36) und der Forminformationen (33, 37) der gescannten Struktur (31, 35) auf Basis des Vergleichsergebnisses,
wobei die Referenzdaten (32, 36) und die Forminformationen (33, 37) der gescannten Struktur (31, 35) gekoppelt und als korrigierte Daten (34, 38) gebildet werden, und
wobei ein Scanfehler als eine Vielzahl vorbestimmter Muster oder Farben auf der Oberfläche der Bilddaten (1) angezeigt wird.

2. Computerimplementiertes Verfahren nach Anspruch 1, wobei die Struktur ein Scanbody (35) oder ein Abutment (31) ist.

3. Computerimplementiertes Verfahren nach Anspruch 1, wobei das Erfassen der Bilddaten (1) das Erfassen einer Vielzahl von 2D-Bilddaten von einer Scan-Einheit des 3D-Scanners umfasst und das Generieren von 3D-Bilddaten (1) auf Basis der erfassten Vielzahl von 2D-Daten.

4. Computerimplementiertes Verfahren nach Anspruch 3, wobei das Erfassen der Bilddaten (1) weiterhin das Aktualisieren der Bilddaten (1) durch Scannen neuer Bilddaten in Echtzeit umfasst,
wobei das Aktualisieren der Bilddaten das Überlagern der neu erfassten Bilddaten auf die zuvor erfassten Bilddaten umfasst.

5. Computerimplementiertes Verfahren nach Anspruch 1, wobei das Erfassen der Forminformationen (33, 37) der gescannten Struktur (31, 35), das Vergleichen der Forminformationen (33, 37) und das Ausrichten der Positionen gleichzeitig mit dem Erfassen der Bilddaten (1) durchgeführt werden.

6. Computerimplementiertes Verfahren nach Anspruch 1, weiter umfassend, nach dem Vergleichen der Forminformationen (33, 37) der Bilddaten (1) mit den Referenzdaten (32, 36), Bestimmen, ob das Vergleichsergebnis einen Endreferenzwert erfüllt, und Beenden des Erfassens der Bilddaten (1) und des Ausrichtens der Standorte gemäß einer Endbedingung.

7. Computerimplementiertes Verfahren nach Anspruch 1, wobei die Referenzdaten (32, 36) und die Bilddaten (1) automatisch ausgerichtet werden.

8. Computerimplementiertes Verfahren nach Anspruch 7, wobei das Ausrichten der Positionen das Ausrichten der Referenzdaten (32, 36) auf Basis des gescannten Standorts der Bilddaten (1) umfasst.

9. Computerimplementiertes Verfahren nach Anspruch 1, wobei das Ausrichten der Positionen durch Überlagern eines Referenzpunktes der Bilddaten (1) auf einen Referenzpunkt der Referenzdaten (32, 36) für die Struktur (31, 35) durchgeführt wird.

10. Computerimplementiertes Verfahren nach Anspruch 9, wobei die Anzahl der Referenzpunkte auf eins oder drei festgelegt wird.

11. Computerimplementiertes Verfahren nach Anspruch 1, wobei das Erfassen der Bilddaten (1), das Erfassen der Forminformationen (33, 37), das Vergleichen der Forminformationen (33, 37) und das Ausrichten der Positionen auf einer Scan-Schnittstelle (100) durchgeführt werden.

12. Computerimplementiertes Verfahren nach Anspruch 11, weiter umfassend das Laden der Referenzdaten (32, 36) für die Struktur (31, 35) aus einer zuvor montierten Bibliothek.

13. Computerimplementiertes Verfahren nach Anspruch 12, wobei beim Laden der Referenzdaten (32, 36) die Referenzdaten (32, 36) für die Struktur (31, 35) auf einer Bibliotheksschnittstelle (300) angezeigt werden, die sich von der Scan-Schnittstelle (100) unterscheidet.

14. Computerimplementiertes Verfahren nach Anspruch 13, wobei das Laden der Referenzdaten (32, 36) das Auswählen und Zuweisen von Referenzdaten (32, 36) für die Struktur (31, 35), die von einem Benutzer benötigt werden, und das Anordnen eines 3D-Modells (32, 36) der ausgewählten Referenzdaten für die Struktur (31, 35), ausgewählt beim Auswählen und Zuweisen der Referenzdaten (32, 36), an einem zufälligen Ort auf der Scan-Schnittstelle (100) umfasst.

15. Computerimplementiertes Verfahren nach Anspruch 1, wobei die Referenzdaten (23, 36) für die Struktur (31, 35) entweder 3D-CAD-Planungsdaten der Struktur (31, 35), 3D-Oberflächendaten, die durch Umwandeln der Planungsdaten erhalten werden, oder aus den 3D-CAD-Planungsdaten oder den 3D-Oberflächendaten extrahierte Merkmalspunktdaten sind.

## Revendications

1. Procédé mis en oeuvre par ordinateur destiné à traiter des données balayées tridimensionnelles (3D) pour fabriquer une prothèse dentaire, comprenant les étapes suivantes :
acquérir des données d'image (1) à partir d'un objet cible (10, 20), sur lequel une structure (31, 35) pour un traitement prothétique est installée, par le biais d'un scanner 3D ;
acquérir des informations de forme (33, 37) de la structure (31, 35) à partir des données d'image (1) ;
comparer les informations de forme (33, 37) de la structure scannée (31, 35) acquises lors de l'acquisition des données d'image (1), avec des données de référence (32, 36) pour la structure (31, 35), et
aligner les emplacements des données de référence (32, 36) et les informations de forme (33, 37) de la structure scannée (31, 35), sur la base du résultat de comparaison,
dans lequel les données de référence (32, 36), et les informations de forme (33, 37) de la structure scannée (31, 35) sont appariées et formées comme des données corrigées (34, 38), et
dans lequel une erreur de scannage est affichée sous la forme d'une pluralité de motifs ou couleurs prédéterminés sur la surface des données d'image (1).

2. Procédé mis en oeuvre par ordinateur selon la revendication 1, dans lequel la structure est un corps de scannage (35) ou pilier (31).

3. Procédé mis en oeuvre par ordinateur selon la revendication 1, dans lequel l'acquisition des données d'image (1) comprend l'étape pour acquérir une pluralité de données d'image bidimensionnelles (2D) à partir d'une unité de scannage du scanner 3D, et générer des données d'image 3D (1) sur la base de la pluralité de données bidimensionnelles acquises.

4. Procédé mis en oeuvre par ordinateur selon la revendication 3, dans lequel l'acquisition des données d'image (1) comprend en outre l'étape pour mettre à jour les données d'image (1) en scannant de nouvelles données d'image en temps réel,
dans lequel l'étape de mise à jour des données d'image comprend l'étape pour superposer les données d'image nouvellement acquises sur les données d'image acquises précédemment.

5. Procédé mis en oeuvre par ordinateur selon la revendication 1, dans lequel l'acquisition des informations de forme (33, 37) de la structure scannée (31, 35), la comparaison des informations de forme (33, 37), et l'alignement des emplacements sont réalisés en même temps que l'acquisition des données d'image (1).

6. Procédé mis en oeuvre par ordinateur selon la revendication 1, comprenant en outre après la comparaison des informations de forme (33, 37) des données d'image (1) avec les données de référence (32, 36), l'étape pour déterminer si oui ou non le résultat de comparaison satisfait une valeur de référence de fin, et l'étape pour terminer l'acquisition des données d'image (1) et aligner les emplacements conformément à une condition de fin.

7. Procédé mis en oeuvre par ordinateur selon la revendication 1, dans lequel les données de référence (32, 36) et les données d'image (1) sont alignées automatiquement.

8. Procédé mis en oeuvre par ordinateur selon la revendication 7, dans lequel l'alignement des emplacements comprend l'étape pour aligner les données de référence (32, 36) sur la base de l'emplacement scanné des données d'image (1).

9. Procédé mis en oeuvre par ordinateur selon la revendication 1, dans lequel l'alignement des emplacements est réalisé en superposant un point de référence des données d'image (1) sur un point de référence des données de référence (32, 36) pour la structure (31, 35).

10. Procédé mis en oeuvre par ordinateur selon la revendication 9, dans lequel le nombre de points de référence est réglé sur un à trois.

11. Procédé mis en oeuvre par ordinateur selon la revendication 1, dans lequel l'acquisition des données d'image (1), l'acquisition des informations de forme (33, 37), la comparaison des informations de forme (33, 37), et l'alignement des emplacements sont réalisés sur une interface de scannage (100).

12. Procédé mis en oeuvre par ordinateur selon la revendication 11, comprenant en outre l'étape pour charger les données de référence (32, 36) pour la structure (31, 35) à partir d'une bibliothèque montée préalablement.

13. Procédé mis en oeuvre par ordinateur selon la revendication 12, dans lequel lors de l'étape pour charger les données de référence (32, 36), les données de référence (32, 36) pour la structure (31, 35) sont affichées sur une interface de bibliothèque (300), différente de celle de l'interface de scannage (100).

14. Procédé mis en oeuvre par ordinateur selon la revendication 13, dans lequel le chargement des données de référence (32, 36) comprend les étapes pour sélectionner et attribuer les données de références (32, 36) pour la structure (31, 35) nécessitées par un utilisateur, et agencer un modèle 3D (32, 36) des données de références pour la structure (31, 35), sélectionnées lors des étapes pour sélectionner et attribuer les données de références (32, 36) en un emplacement aléatoire sur l'interface de scannage (100).

15. Procédé mis en oeuvre par ordinateur selon la revendication 1, dans lequel les données de référence (23, 36) pour la structure (31, 35) sont l'une quelconque de données de plan CAO 3D de la structure (31, 35), de données de surface 3D obtenues en convertissant les données de plan, et de données de point de caractéristique extraites des données de plan CAO 3D ou des données de surface 3D.
